# FASCICULE DE BREVET EUROPEEN

(11) **EP 1 378 805 B1**
(45) Date de publication et mention de la délivrance du brevet: **17.01.2007**
(21) Numéro de dépôt: 02291651.4
(22) Date de dépôt: 02.07.2002
(51) Int. Cl.: G04G 1/00, H01Q 1/27

(54) **Pièce d'horlogerie munie d'une antenne**
Uhrwerk mit Antenne
Timepiece fitted with an antenna

(43) Date de publication de la demande: 07.01.2004
(73) Titulaire: CSEM Centre Suisse d'Electronique et de Microtechnique SA Recherche et Développement, 2007 Neuchâtel (CH)
(72) Inventeur: Xu, Qin, 2000 Neuchatel (CH); Piguet, Christian, 2000 Neuchatel (CH)
(74) Mandataire: Colas, Jean-Pierre

(56) Documents cités:
- EP-A- 0 741 433
- EP-A- 0 844 685
- DE-U- 29 707 874
- US-A- 6 047 163

## Description

La présente invention est relative à une pièce d'horlogerie, en particulier une montre bracelet, munie d'une antenne permettant de capter et, le cas échéant, d'émettre des signaux radio.

Dans le but d'offrir au marché horloger des pièces d'horlogerie, et en particulier des montres-bracelets, de haute technologie de plus en plus sophistiquées, l'antenne permettant de communiquer avec l'environnement devient un composant indispensable de la montre. Des réalisations de telles antennes ont été proposées en grand nombre dans le passé. Elles ont généralement en commun leur emplacement à l'intérieur de la carrure de montre, par exemple sous le verre ou dans un logement latéral préformé situé en dehors du périmètre du cadran. D'autres réalisations comprennent une antenne dans le bracelet de la montre. Toutes ces antennes doivent être connectées à un circuit intégré comprenant les circuits nécessaires pour leur fournir le signal d'émission et/ou pour traiter le signal de réception qu'elles reçoivent. L'énergie nécessaire au fonctionnement de l'ensemble est en général fournie par la pile qui assure simultanément le fonctionnement des circuits horométriques de la pièce d'horlogerie.

Le fait de loger l'antenne à l'intérieur du boîtier permet de la protéger des influences extérieures défavorables et facilite la connexion avec le circuit intégré de la pièce d'horlogerie. Toutefois, dans ce cas, l'antenne nécessite de la place à l'intérieur du boîtier et ne peut avoir qu'une taille très réduite tout en rendant plus complexe la construction du mouvement. Par ailleurs, pour assurer les performances requises de l'antenne, il devient nécessaire de réaliser le boîtier en un matériau qui ne forme pas écran vis-à-vis des champs magnétique et électrique de l'antenne.

La solution préconisée dans EP 0 844 685 remédie aux inconvénients liés à la présence de l'antenne à l'intérieur du boîtier de la montre. Dans ce cas, le transpondeur d'émission/réception est placé dans son ensemble dans une lunette rapportée, de préférence de façon amovible, sur la carrure en entourant la glace de la montre. Ainsi, la lunette présente une structure qui peut être fixée par enclenchement sur le boîtier et forme un logement périphérique dans lequel est disposé le transpondeur. Ce logement est fermé par un couvercle annulaire en matière plastique nécessaire pour que l'échange de l'énergie électromagnétique avec l'antenne puisse avoir lieu.

Une telle structure présente les inconvénients d'être complexe et coûteuse, la lunette ayant par ailleurs un aspect tout à fait particulier qui empêche de donner à la montre un aspect harmonieux compatible avec une montre de moyen ou haut de gamme.

L'invention a pour but de remédier à ces inconvénients.

Le document EP-A-0 741 433 décrit une pièce d'horlogerie, en particulier une montre bracelet comprenant une carrure, un mouvement de montre logé dans la carrure, un circuit d'émission/réception associé à ce mouvement ainsi qu'une antenne portant la référence 80 sur la figure 13 connectée audit circuit d'émission/réception. L'antenne 80 est connectée audit circuit d'émission/réception par l'intermédiaire d'un conducteur traversant la paroi de la carrure (cf. référence 133) sur une partie de son épaisseur.

L'invention a pour objet une montre présentant les caractéristiques de la revendication 1.

Grâce à ces caractéristiques, l'antenne présente une structure très simple. En outre, la forme et l'aspect extérieur de l'antenne peuvent être tels que l'esthétique de l'ensemble de la montre soit compatible avec les critères que l'on impose habituellement aux montres de moyen et haut de gamme.

Des caractéristiques complémentaires avantageuses de la montre selon l'invention sont définies dans les sous-revendications.

L'invention sera maintenant illustrée à l'aide de plusieurs exemples de réalisation décrits en faisant référence au dessin annexé, donné uniquement à titre d'exemple et sur lequel:

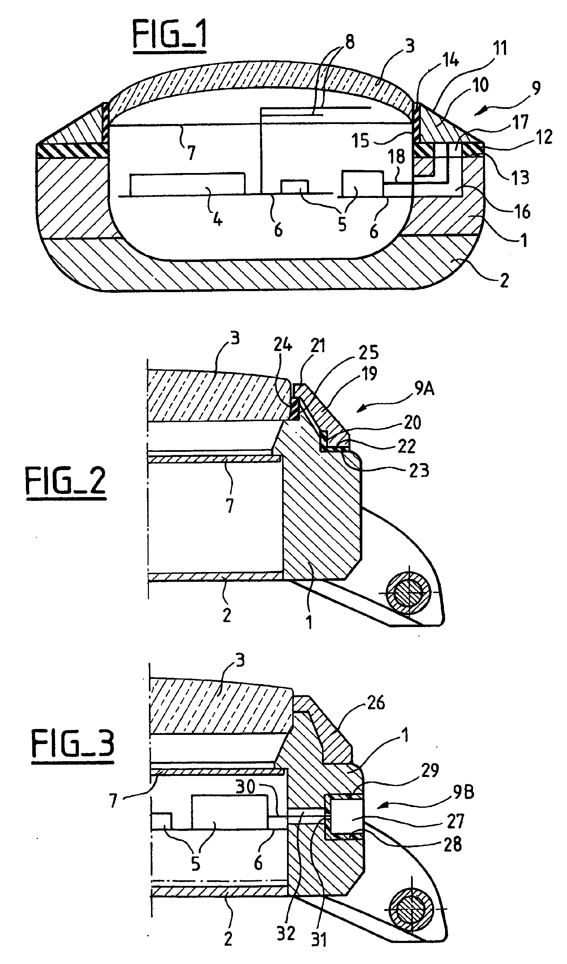

les figures 1 à 3 représentent de façon très simplifiée et par des coupes respectivement diamétrale entière et diamétrale partielle, une pièce d'horlogerie réalisée selon l'invention.

Sur la figure 1, on a représenté un premier mode de réalisation possible d'une pièce d'horlogerie, en particulier une montre-bracelet selon l'invention. Elle comprend une carrure 1 fermée par un fond 2 et surmontée d'un verre 3. Dans la carrure 1 sont logés un mouvement horométrique 4 et un circuit d'émission et/ou de réception 5 placés sur une ou plusieurs platines 6. Le mouvement 4 et le circuit 5 sont classiques et ne font pas partie de l'invention de sorte qu'ils ne sont pas décrits en détail ici. A titre d'exemple, le circuit d'émission et/ou de réception 5 peut être formé par celui décrit dans la demande européenne n° 01 401 093.8, publiée après la date de dépôt de la présente demande avec le numéro de publication EP 1 253 488. Toutefois, la présente invention n'est pas limitée à un circuit d'émission et/ou de réception particulier, si ce n'est que l'on peut noter que l'antenne conçue suivant l'invention est particulièrement adaptée pour fonctionner à une fréquence située dans la bande d'une centaine de MHz.

Un cadran 7 est disposé sous le verre 3, le mouvement 4 entraînant des aiguilles 8 utilisées ici pour afficher les informations horaires. Toutefois, d'autres types d'affichages connus en soi sont possibles.

Selon l'invention, la pièce d'horlogerie comprend également une antenne 9 qui est formée d'une masse monobloc solide annulaire 10, conductrice de l'électricité et, dans le présent exemple, de section triangulaire. Cette masse 10 peut s'étendre sur une partie périphérique de la pièce d'horlogerie ou, en variante et de préférence, être constituée d'un anneau monobloc fermé s'étendant sur toute la périphérie de la pièce d'horlogerie. Elle est réalisée en un métal bon conducteur de l'électricité tel que certains aciers inoxydables ou alliages d'or ou encore en une matière composite agglomérée, telle la zircone (ZrO₂) par exemple, chargée de particules conductrices de l'électricité. Comme dans le présent mode de réalisation, la masse solide 10 forme la lunette de la pièce d'horlogerie en même temps que son antenne, sa forme et la nature du matériau dont elle est faite doivent être compatibles avec les exigences d'esthétique habituelles en horlogerie. Pour augmenter ses qualités de résistance vis-à-vis des influences extérieures et notamment de l'abrasion, la masse 10 est de préférence revêtue extérieurement d'une couche en un matériau à haute dureté tel que le rhodium ou le diamant.

Dans l'exemple de la figure 1, la carrure 1 est supposée être réalisée en un métal. De ce fait, l'antenne 9 est fixée sur la carrure par l'intermédiaire d'un isolant. Ce dernier comprend une rondelle isolante 12 placée sur la face annulaire supérieure 13 de la carrure et un manchon isolant 14 placé à angle droit par rapport à cette rondelle 12 contre la surface annulaire interne 15 de la masse solide 10. Le verre 3 est emmanché par chassage à l'intérieur de ce manchon 14 pour assurer une parfaite étanchéité de l'ensemble. Sur le dessin, l'épaisseur de l'isolant a été exagérée pour plus de clarté. Pour fixer les idées, une épaisseur située entre 1 et 2 mm peut suffire.

La carrure 1 comprend un perçage à angle droit 16 qui débouche d'une part latéralement à l'intérieur de la carrure et en haut dans un trou 17 pratiqué dans la rondelle isolante 12. Le canal ainsi créé sert au passage d'un conducteur de connexion 18 menant de l'antenne 9 au circuit d'émission et/ou de réception 5.

Le matériau de la rondelle 12 et du manchon 14 est choisi de préférence dans un groupe constitué par les caoutchoucs nitriles, les caoutchoucs nitriles hydrogénés, les polyuréthannes, les silicones, les polymères ou les céramiques. Des matériaux tels que Zytel (résines polyamides fabriquées par la Société Dupont de Nemours) et le Hytrel (élastomère thermoplastique) (marques déposées) ont la préférence. Ils favorisent l'obtention de l'étanchéité entre le verre 3 et l'antenne 9.

L'antenne 9 peut être fixée aux isolants 12 et 14 par tout moyen approprié connu des horlogers. Dans l'exemple de la figure 1, le mode de fixation peut être le collage.

Il est évident que si la carrure est réalisée en une matière plastique, l'isolant 12 entre la masse solide 10 et la carrure 1 peut être omis.

Dans les exemples des figures 2 et 3, les éléments ayant les mêmes fonctions et/ou formes que sur la figure 1, portent les mêmes références numériques.

Dans le cas de la figure 2, la pièce d'horlogerie comporte une antenne 9A présentant une forme profilée davantage que l'antenne 9 de la figure 1 afin d'améliorer l'esthétique de la montre, l'antenne 9A étant, ici également, utilisée comme lunette. Elle présente la forme d'un anneau monobloc 19 à surfaces interne et externe tronconiques et coaxiales, anneau sur lequel se raccordent en bas un pied annulaire 20 et en haut un rebord 21 s'étendant radialement. La carrure 1 est usinée de manière à présenter d'une part une assise annulaire extérieure 22 à profil en équerre sur laquelle vient s'appliquer un premier joint annulaire 23 à profil en équerre et isolant de l'électricité, et d'autre part une seconde assise annulaire intérieure 24 contre laquelle vient s'appuyer un second joint annulaire 25 en forme de manchon et également isolant de l'électricité.

L'antenne 9A formant lunette est de préférence chassée sur la carrure 1 avec interposition du joint 23, tandis que le verre 3 est fixé de préférence sur la carrure 1 par chassage dans le joint 25. On notera qu'ainsi, l'antenne 9A est isolée du reste de la pièce d'horlogerie et forme une masse solide entièrement dédiée à la fonction d'émission et/ou de réception, tout en constituant une lunette n'altérant en rien l'aspect esthétique de la pièce. Pour augmenter la résistance à l'abrasion de l'antenne 9A, une couche de protection peut la revêtir comme dans le cas de la figure 1.

Dans le cas de la figure 3, il s'agit d'une montre qui présente une structure classique avec une carrure 1 et une lunette 26 qui n'a ici qu'une fonction esthétique. Cette montre comprend une antenne 9B formée par une bague 27 en une masse monobloc solide conductrice de l'électricité qui est enchâssée dans une rainure annulaire 28 ménagée dans la surface latérale de la carrure 1. L'antenne 9B est isolée de celle-ci par un anneau isolant 29 qui revêt le fond et les parois de la rainure 28. L'antenne 98 est connectée à un circuit d'émission/réception 5 de la pièce d'horlogerie par l'intermédiaire d'un conducteur 30 passant à travers un trou 31 de l'anneau isolant 29 et un trou 32 conduisant de la rainure 28 à l'espace intérieur de la montre.

Dans l'exemple de la figure 3, la carrure 1 est réalisée en métal de sorte que l'utilisation d'un élément isolant tel que l'anneau 29 s'impose. Bien entendu, on peut s'en dispenser si la carrure est réalisée en matière isolante. Si le fond 2 est en métal, il peut alors servir de plan de masse pour l'antenne 9B. Sinon, il convient de disposer contre le fond en un matériau isolant, et de préférence contre sa face interne, un disque métallique (non représenté) connecté au circuit d'émission et/ou de réception 5.

Quel que soit le mode de réalisation de la montre selon l'invention, l'antenne 9, 9A ou 9B est de préférence conçue comme une antenne de type capacitif non résonnante directement reliée au circuit d'émission et/ou de réception 5 sans interposition de composants discrets tels que des bobines ou des condensateurs. Ce type d'antenne se prête parfaitement aux fréquences des émissions RDS des stations de radio émettant en modulation de fréquence.

Selon une variante qui n'a pas été représentée aux figures, on peut réaliser l'antenne sous la forme d'une lunette tournante en prévoyant des contacts glissants pour la connecter au circuit d'émission et/ou de réception 5.

## Revendications

1. Pièce d'horlogerie, en particulier montre-bracelet comprenant une carrure (1), un mouvement de montre (4) logé dans la carrure, un circuit d'émission et/ou de réception (5) associé audit mouvement ainsi qu'une antenne (9; 9A; 9B) connectée audit circuit d'émission et/ou de réception par l'intermédiaire d'un conducteur (18; 30) traversant la paroi de la carrure (1) sur une partie de son épaisseur, **caractérisée en ce que** ladite antenne (9; 9A; 9B) est formée par une masse monobloc solide (10; 19; 27) conductrice de l'électricité et ayant la forme d'au moins une partie d'un anneau, cette masse étant disposée sur une paroi extérieure de ladite carrure (1).

2. Pièce d'horlogerie suivant la revendication 1, **caractérisée en ce que** ladite masse solide conductrice (10: 19; 27) en forme une partie décorative.

3. Pièce d'horlogerie suivant l'une quelconque des revendications 1 et 2, **caractérisée en ce que** ladite masse solide conductrice (27) est engagée dans une rainure (28) pratiquée dans la surface latérale de la carrure (1), sa surface extérieure affleurant la surface latérale de la carrure.

4. Pièce d'horlogerie suivant la revendication 2, **caractérisée en ce que** ladite masse solide conductrice (10; 19) forme au moins une partie d'une lunette de la pièce entourant la glace de celle-ci.

5. Pièce d'horlogerie suivant l'une quelconque des revendications 1 à 4, **caractérisée en ce que** ladite masse solide conductrice (10; 19; 27) constitue un anneau fermé.

6. Pièce d'horlogerie suivant l'une quelconque des revendications 1 à 5, **caractérisée en ce que** ladite carrure (1) étant réalisée en matière conductrice de l'électricité, ladite masse solide conductrice en est séparée par un isolant (14, 17;.23, 24; 29).

7. Pièce d'horlogerie suivant la revendication 6, **caractérisée en ce que** le ledit isolant (14, 17; 23, 24; 29) est réalisé en un matériau choisi dans le groupe constitué par les caoutchoucs nitriles, les caoutchoucs nitriles hydrogénés, les polyuréthannes, les silicones, les polymères ou les céramiques.

8. Pièce d'horlogerie suivant l'une quelconque des revendications 1 à 7, **caractérisée en ce que** ladite masse solide conductrice (10; 19; 27) et, le cas échéant, ledit isolant (14, 17; 23, 24; 29) sont rapportés à ladite carrure par au moins l'une des opérations suivantes: le chassage, le vissage, le collage, le brasage, le sertissage et/ou le rivetage.

9. Pièce d'horlogerie suivant l'une quelconque des revendications 1 à 8, **caractérisée en ce que** ladite masse solide conductrice (10; 19; 27) est réalisée en un métal, tel que l'acier inoxydable ou un alliage d'or ou faite d'une masse composite agglomérée, en zircone par exemple, chargée de particules conductrices.

10. Pièce d'horlogerie suivant la revendication 9, **caractérisée en ce que** ladite masse conductrice solide (10; 19; 27) est revêtue d'une couche de dureté élevée (11), faite par exemple en rhodium ou en diamant.

11. Pièce d'horlogerie suivant l'une quelconque des revendications 1 à 10, **caractérisée en ce qu'**elle comprend un élément conducteur (2) formant plan de masse pour ladite antenne.

12. Pièce d'horlogerie suivant la revendication 11, **caractérisée en ce que**, ladite carrure étant métallique, ledit élément formant plan de masse est constitué par le fond (2) de cette carrure.

13. Pièce d'horlogerie suivant la revendication 11, **caractérisée en ce que** ladite carrure étant en un matériau non-conducteur de l'électricité, ledit élément formant plan de masse est constitué par un disque métallique placé à l'intérieur de la carrure contre le fond de celle-ci.

14. Pièce d'horlogerie suivant l'une quelconque des revendications précédentes, **caractérisée en ce que** ladite antenne (9; 9A; 9B) est de type capacitif et connectée directement audit circuit d'émission et/ou de réception (5).

## Claims

1. Timepiece, in particular wristwatch comprising a middle (1), a watch movement (4) housed in the middle, a transceiver circuit (5) associated with said movement and an antenna (9; 9A; 9B) connected to said transceiver circuit by way of a conductor (18; 30) passing through the wall of the middle (1) on a portion of its thickness, **characterized in that** said antenna (9; 9A; 9B) is formed by a solid electrically conductive monobloc mass (10; 19; 27) having the shape of at least a portion of a ring, this mass being disposed on an exterior wall of said middle (1).

2. Timepiece according to claim 1, **characterized in that** said conductive solid mass (10; 19; 27) forms a decorative portion thereof.

3. Timepiece according to either one of claims 1 and 2, **characterized in that** said conductive solid mass (27) is engaged in a groove (28) made in the lateral surface of the middle (1), its outer surface just touching the lateral surface of the middle.

4. Timepiece according to claim 2, **characterized in that** said conductive solid mass (10; 19) forms at least a portion of a bezel of the piece surrounding the glass disk of the latter.

5. Timepiece according to any one of claims 1 to 4, **characterized in that** said conductive solid mass (10; 19; 27) constitutes a closed ring.

6. Timepiece according to any one of claims 1 to 5, **characterized in that** said middle (1) being made of electrically conductive material, said conductive solid mass is separated therefrom by an insulator (14, 17; 23, 24; 29).

7. Timepiece according to claim 6, **characterized in that** said insulator (14, 17; 23, 24; 29) is made of a material chosen from the group consisting of the nitrile rubbers, hydrogenated nitrile rubbers, polyurethanes, silicones, polymers or ceramics.

8. Timepiece according to any one of claims 1 to 7, **characterized in that** said conductive solid mass (10; 19; 27) and, where appropriate, said insulator (14, 17; 23, 24; 29) are fixedly attached to said middle by at least one of the following operations: chasing, screwing, bonding, brazing, crimping and/or riveting.

9. Timepiece according to any one of claims 1 to 8, **characterized in that** said conductive solid mass (10; 19; 27) is made of a metal such as stainless steel or a gold alloy or made of an agglomerated composite mass, in zirconia for example, charged with conductive particles.

10. Timepiece according to claim 9, **characterized in that** said solid conductive mass (10; 19; 27) is coated with a very hard layer (11), made for example of rhodium or diamond.

11. Timepiece according to any one of claims 1 to 10, **characterized in that** it comprises a conductive element (2) forming a ground plane for said antenna.

12. Timepiece according to claim 11, **characterized in that**, said middle being metallic, said element forming the ground plane consists of the back (2) of this middle.

13. Timepiece according to claim 11, **characterized in that**, said middle being of an electrically nonconductive material, said element forming the earth plane consists of a metal disk placed inside the middle against the back of the latter.

14. Timepiece according to any one of the preceding claims, **characterized in that** said antenna (9; 9A; 9B) is of capacitive type and connected directly to said transceiver circuit (5).

## Patentansprüche

1. Uhrmachereierzeugnis, insbesondere eine Armbanduhr, umfassend eine Wandung (1), ein Uhrwerk (4), das in der Wandung aufgenommen ist, eine Schaltung zum Senden und/oder Empfangen (5), die mit dem Uhrwerk in Verbindung steht, sowie eine Antenne (9; 9A; 9B), die mit der Schaltung zum Senden und/oder Empfangen mittels eines Leiters (18; 30) verbunden ist, der die Wand der Wandung (1) über einen Teil ihrer Breite durchdringt, **dadurch gekennzeichnet, dass** die Antenne (9; 9A; 9B) durch eine Masse in einem Stück (10; 19; 27) gebildet ist, die elektrisch leitend ist und die Form mindestens eines Teils eines Rings aufweist, wobei diese Masse auf einer äußeren Wand der Wandung (1) angeordnet ist.

2. Uhrmachereierzeugnis nach Anspruch 1, **dadurch gekennzeichnet, dass** die feste leitende Masse (10; 19; 27) einen dekorativen Teil davon bildet.

3. Uhrmachereierzeugnis nach einem der Ansprüche 1 und 2, **dadurch gekennzeichnet, dass** die feste leitende Masse (27) in eine Nut (28) eingreift, die in der seitlichen Fläche der Wandung (1) eingebracht ist, wobei ihre äußere Fläche mit der seitlichen Fläche der Wandung fluchtet.

4. Uhrmachereierzeugnis nach Anspruch 2, **dadurch gekennzeichnet, dass** die feste leitende Masse (10; 19) mindestens einen Teil einer Lünette des Erzeugnisses bildet, die dessen Glas umgibt.

5. Uhrmachereierzeugnis nach einem der Ansprüche 1 bis 4, **dadurch gekennzeichnet, dass** die feste leitende Masse (10; 19; 27) einen geschlossenen Ring darstellt.

6. Uhrmachereierzeugnis nach einem der Ansprüche 1 bis 5, **dadurch gekennzeichnet, dass** die Wandung (1) aus elektrisch leitendem Material hergestellt ist, wobei die feste leitende Masse durch einen Isolierkörper (14, 17; 23, 24; 29) von ihr getrennt ist.

7. Uhrmachereierzeugnis nach Anspruch 6, **dadurch gekennzeichnet, dass** der Isolierkörper (14, 17; 23, 24; 29) aus einem Material hergestellt ist, das aus der Gruppe ausgewählt ist, die aus Nitrilgummis, wasserstoffhaltigen Nitrilgummis, Polyurethanen, Silikonen, Polymeren oder Keramiken besteht.

8. Uhrmachereierzeugnis nach einem der Ansprüche 1 bis 7, **dadurch gekennzeichnet, dass** die feste leitende Masse (10; 19; 27) und gegebenenfalls der Isolierkörper (14, 17; 23, 24; 29) in die Wandung durch mindestens einen der folgenden Arbeitsgänge eingesetzt werden: Eintreiben, Einschrauben, Kleben, Löten, Einfassen und/oder Nieten.

9. Uhrmachereierzeugnis nach einem der Ansprüche 1 bis 8, **dadurch gekennzeichnet, dass** die feste leitende Masse (10; 19; 27) aus einem Metall hergestellt ist, wie Edelstahl oder einer Goldlegierung, oder aus einer zusammengepressten Verbundmasse besteht, aus Zirconiumoxid zum Beispiel, die mit leitenden Partikeln geladen ist.

10. Uhrmachereierzeugnis nach Anspruch 9, **dadurch gekennzeichnet, dass** die feste leitende Masse (10; 19; 27) mit einer Schicht großer Härte (11) beschichtet ist, die zum Beispiel aus Rhodium oder aus Diamant hergestellt ist.

11. Uhrmachereierzeugnis nach einem der Ansprüche 1 bis 10, **dadurch gekennzeichnet, dass** es ein leitendes Element (2) umfasst, das eine Masseebene für die Antenne bildet.

12. Uhrmachereierzeugnis nach Anspruch 11, **dadurch gekennzeichnet, dass**, da die Wandung aus Metall besteht, das Element, das die Masseebene bildet, durch den Boden (2) der Wandung gebildet ist.

13. Uhrmachereierzeugnis nach Anspruch 11, **dadurch gekennzeichnet, dass** die Wandung aus einem elektrisch nicht leitenden Material besteht, wobei das Element, das die Masseebene bildet, aus einer Metallscheibe besteht, die im Inneren der Wandung gegen deren Boden platziert ist.

14. Uhrmachereierzeugnis nach einem der vorhergehenden Ansprüche, **dadurch gekennzeichnet, dass** die Antenne (9; 9A; 9B) ein kapazitiver Typ ist und direkt mit der Schaltung zum Senden und/oder Empfangen (5) verbunden ist.
